Europäisches Patentamt

European Patent Office

Office européen des brevets

Veröffentlichungsnummer: **0 297 343**

**A1**

# EUROPÄISCHE PATENTANMELDUNG

(21) Anmeldenummer: 88109413.0

(22) Anmeldetag: 14.06.88

(51) Int. Cl.4 **H01T 2/00 , H01S 3/097 , B23K 28/00**

(30) Priorität: 25.06.87 DE 3721007
23.12.87 DE 3743756

(43) Veröffentlichungstag der Anmeldung:
04.01.89 Patentblatt 89/01

(84) Benannte Vertragsstaaten:
**BE CH DE FR GB LI LU NL SE**

(71) Anmelder: **BEERWALD, Hans**
**Kalkgasse 2**
**D-5370 Kall-Sistig(DE)**

Anmelder: **Böhm, Günter Dr.**
**Potthofstrasse 30**
**D-5810 Witten-Heven(DE)**

(72) Erfinder: **BEERWALD, Hans**
**Kalkgasse 2**
**D-5370 Kall-Sistig(DE)**
Erfinder: **Böhm, Günter Dr.**
**Potthofstrasse 30**
**D-5810 Witten-Heven(DE)**

(74) Vertreter: **Behrendt, Arne, Dipl.-Ing.**
**Am Waldschlösschen 11 Postfach 100 226**
**D-4630 Bochum-Weitmar(DE)**

(54) **Triggerbare Funkenstrecke.**

(57) Bei einer triggerbaren Funkenstrecke, deren mit Abstand zueinander angeordnete Elektroden (1, 3) integrale Bestandteile eines Mikrowellen-Wellenleitersystemes sind, welches an einen Mikrowellengenerator (7) angeschlossen ist, der Mikrowellenimpulse hoher Leistung erzeugt, welche beim Einkoppeln in das Wellenleitersystem den Funkenüberschlag zwischen den Elektroden initiieren, weist das Wellenleitersystem eine Konfiguration auf, die beim Einkoppeln des Mikrowellenimpulses allein durch Mikrowellenenergie unabhängig von der an den Elektroden (1, 3) anliegenden Spannung mehrere Funkenkanäle erzeugt.

FIG.1

## Triggerbare Funkenstrecke

Die Erfindung betrifft eine triggerbare Funkenstrecke nach dem Gattungsbegriff des Patentanspruches 1.

Funkenstrecken werden zur Erzeugung von Hochstromimpulsen benötigt. die beispielsweise zur Anregung bestimmter Gaslaser (Excimer-Laser), für die Erzeugung von Stoßwellen. für die Hochgeschwindigkeitsbearbeitung von metallischen Werkstoffen oder für die elektromagnetische Beschleunigung von Geschossen verwendet werden.

Als triggerbare Funkenstrecken werden nach dem Stande der Technik meist Dreielektrodenfunkenstrecken verwendet, bei denen die dritte Elektrode zum zeitlich genau definierten Zünden dient (vergl. R. Winkler. "Hochgeschwindigkeitsbearbeitung - Grundlagen und technische Anwendung elektrisch erzeugter Schockwellen und Impulsmagnetfelder". VEB Verlag Technik Berlin. 1973, Seiten 52 - 76). In der Aufbauphase haben Funkenstrecken eine Induktivität in der Größenordnung von ca 3onH cm. Dadurch wird die Steilheit des Stromanstieges verschlechtert. Man ist deshalb bestrebt. gleichzeitig eine Vielzahl von parallelen Funkenkanälen zu erzeugen. So ist es nach dem Stande der Technik bekannt. Dreielektrodenfunkenstrecken mit mehreren Funkenkanälen zu bauen (Vergl. N. Thomas Olson. J. Bandas. A.C. Kolb. J. Appl. Physics. 5o (1979). 7768. N. Seddon, P.H. Dickinson. Rev. Sc. Instr., 58 (1987). 8o49).

Ein Nachteil derartiger Dreielektrodenfunkenstrecken ist ihre Beschränkung auf einen relativ engen Betriebsspannungsbereich. der geringfügig unterhalb der Durchbruchspannung liegen muß und durch Änderungen des Elektrodenabstandes und oder des Gasdruckes eingestellt werden kann.

Dieser Nachteil wird bei nach dem Stande der Technik bekannten Zweielektrodenfunkenstrecken vermieden. bei denen auf die Elektroden zum Zwecke der Zündung ein steilflankiger Hochspannungsimpuls gegeben wird. Bei derartigen Zweielektrodenfunkenstrecken reicht der Betriebsspannungsbereich herab bis zu kleinsten Spannungen. Der zur Zündung erforderliche Hochspannungsimpuls macht es jedoch notwendig. in die Zuleitung zum Energiespeicher und oder zur Last eine Entkoppelungsinduktivität einzufügen. die sich bei der Erzeugung steilflankiger Hochstromimpulse störend auswirkt. Um den störenden Einfluß der Entkoppelungsinduktivität zu mildern, ist versucht worden, für die Entkoppelungsinduktivität sättigbares Ferritmaterial zu ver wenden. Grundsätzlich wird bei dieser Funkenstrecke zwischen dem Elektrodenpaar nur ein einzelner Funkenkanal erzeugt.

Nach dem Stande der Technik ist es auch bekannt. eine Zweielektrodenfunkenstrecke durch Einwirkung einer ionisierenden Strahlung auf den Raum zwischen den Elektroden zu zünden. Dabei ist als ionisierende Strahlung eine radioaktive Korpuskular- oder eine elektromagnetische Strahlung in Form von Röntgen-oder Laser-Strahlung vorgesehen (vergl. R. Winkler. a.a.O. Seite 51 ). Weiterhin kann nach dieser Literaturstelle die Zündung einer Funkenstrecke auch dadurch erfolgen. daß durch Bestrahlung der Kathode mit einem ausreichend starken UV-Impuls oder Laser-Impuls Fotoelektronen oder thermische Elektronen ausgelöst werden. die eine Zündung der Funkenstrecke bewirken. Diese Verfahren sind indessen umständlich und gefährlich in der Anwendung und bedingen einen außerordentlich hohen baulichen Aufwand, so daß sie sich in der Praxis nicht haben durchsetzen können. Außerdem muß auch bei dieser Funkenstrecke die Betriebsspannung nahe der Durchbruchspannung liegen.

Bei der triggerbaren Funkenstrecke nach dem Gattungsbegriff des Patentanspruches 1 (vgl. US-PS 4 477 746) befinden sich die Elektroden an den einander gegenüberliegenden Wänden eines Mikrowellen-Hohlleiters. an welchen ein Mikrowellengenerator (Magnetron) angeschlossen ist. der Mikrowellenimpulse hoher Leistung erzeugt. Die an den Elektroden anliegende Spannung liegt - ähnlich wie bei den meisten der oben diskutierten Funkenstrecken - geringfügig unterhalb der Durchbruchspannung. Beim Einkoppeln des Mikrowellenimpulses in den Wellenleiter verzerrt das Mikrowellenfeld das zwischen den Elektroden befindliche elektrische Feld derart. daß es zu einem Funkenüberschlag zwischen den Elektroden kommt. wobei sich auch hier in der Regel nur ein Funkenkanal ausbildet. Auch diese Funkenstrecke hat den Nachteil. daß sie nur in unmittelbarer Nähe der Durchbruchspannung einwandfrei arbeitet. Diese Durchbruchspannung kann sich jedoch - schnell ändern. zum Beispiel durch Abbrand der Elektroden. durch den andere geometrische Verhältnisse geschaffen werden. oder durch Änderung der Zusammensetzung oder des Druckes des zwischen den Elektroden befindlichen Gases. Wegen der Nähe der Betriebsspannung zu der Durchbruchspannung und den häufig auftretenden Veränderungen der Durchbruchspannung nach oben oder unten besteht bei diesen vorbekannten Funkenstrecken die Gefahr von Ausfällen und oder Fehlzündungen.

Aufgabe der Erfindung ist es. die Funkenstrecke gemäß dem Gattungsbegriff des Patentanspruches 1 dahingehend weiterzubilden. daß die Betriebsspannung einen beliebig großen Abstand zur Durchbruchspannung haben kann, so daß ein weitestgehend störungsfreier Betrieb ermöglicht wird, und daß gezielt eine Vielzahl von Funkenkanälen erzeugt werden kann.

Zur Lösung dieser Aufgabe schlägt die Erfindung ausgehend von einer Funkenstrecke gemäß dem Gattungsbegriff des Patentanspruches 1 vor, daß das Wellenleitersystem eine Konfiguration aufweist, die beim Einkoppeln des Mikrowellenimpulses allein durch Mikrowellenenergie unabhängig von der an den Elektroden anliegenden Gleichspannung mehrere Funkenkanäle erzeugt.

Die Funkenstrecke gemäß der Erfindung hat den besonderen Vorteil, daß sie weitestgehend unabhängig von der Betriebsspannung einwandfrei funktioniert, so daß es bei Abbrand der Elektroden oder anderen Änderungen der Betriebsbedingungen nur noch selten zu Ausfällen und oder Fehlzündungen kommt. Ein weiterer Vorteil der Funkenstrecke gemäß der Erfindung besteht darin, daß man in der geometrischen Ausgestaltung des Wellenleitersystemes weitgehend freie Hand hat, so daß man erforderlichenfalls flächige Elektroden mit einer sehr großen Zahl von gleichzeitig gezündeten Funkenkanälen herstellen kann. Das hat den besonderen Vorteil, daß sich der unvermeidbare Abbrand der Elektroden gleichmäßiger auf die Elektroden verteilt, so daß die Elektroden länger ihre Form und ihren Abstand behalten.

Eine erste Ausführungsform einer Funkenstrecke gemäß der Erfindung sieht vor, daß das Wellenleitersystem in Wandbereichen, in denen der Mikrowellenimpuls hohe Wandströme erzeugt, mit einer oder mehreren Wandunterbrechungen versehen ist, in denen beim Einkoppeln des Mikrowellenimpulses Funken entstehen, wobei die Wandungen des Wellenleitersystemes zum Teil von der einen und zum Teil von der anderen Elektrode gebildet werden.

Bei einer solchen Konfiguration des Wellenleitersystemes werden die den Funkenüberschlag zwischen den Elektroden initiierenden Funken völlig unabhängig von der an den Elektroden anliegenden Betriebsspannung unter ausschließlicher Verwendung der Energie des eingekoppelten Mikrowellenimpulses erzeugt. Die Wandunterbrechungen in den Wandungen des Wellenleitersystemes befinden sich gerade dort, wo sie für die optimale Weiterleitung der Mikrowelle nicht sein dürften. Es handelt sich bei diesen Wandunterbrechungen also um sogenannte "verbotene Schlitze", die in Mikrowellenleitern normalerweise unzulässig sind. Die Erfindung nutzt diese sogenannten "verbotenen Schlitze" zur Erzeugung von Funkenkanälen, in denen die Funken des Hauptstromkreises dann überschlagen. Da die den Funkenüberschlag zwischen den Elektroden initiierenden Funken unabhängig von der an den Elektroden anliegenden Betriebsspannung erzeugt werden, kann man mit Betriebsspannungen arbeiten, die weit unterhalb der Durchbruchspannung liegen, so daß es nicht so leicht zu den oben erläuterten Ausfällen und oder Fehlzündungen kommen kann. Außerdem ist es bei dieser Funkenstrecke auf einfachste Art und Weise möglich, im Bedarfsfalle eine sehr große Zahl von Funkenkanälen praktisch gleichzeitig zu zünden, so daß extrem hohe Ströme in kürzester Zeit geschaltet werden können, ohne daß es zu örtlich konzentrierten Abbranderscheinungen an den Elektroden kommt.

Bei dieser ersten Ausführungsform weist das Wellenleitersystem zweckmäßig einen die erste Elektrode bildenden Rechteckhohlleiter auf, der an einer Breitseite mit Öffnungen versehen ist, die von einer mit engem parallelem Abstand zur Außenseite des Rechteckhohlleiters angeordneten, plattenförmigen zweiten Elektrode abgedeckt sind, wobei an dem Rechteckhohlleiter seitlich neben den Öffnungen Laschen vorgesehen sind, die ebenfalls mit engem parallelem Abstand von der zweiten Elektrode angeordnet sind und von den seitlichen Kanten der Öffnungen jeweils um eine halbe Wellenlänge oder um ein ganzzahliges Vielfaches einer halben Wellenlänge nach außen ragen. Bei dieser Ausbildung der Elektroden entstehen die Funken vorzugsweise an den Rändern und teilweise auch im Flächenbereich der Laschen.

Ein zweites Ausführungsbeispiel einer Funkenstrecke gemäß der Erfindung sieht vor, daß das Wellenleitersystem einen Hohlleiter aufweist, in dessen Innenraum isoliert von dem Hohlleiter ein Leiter angeordnet ist, wobei der Hohlleiter und der Leiter die beiden Elektroden der Funkenstrecke bilden. Diese Ausführungsform der Erfindung arbeitet also nicht mehr mit den sogenannten "verbotenen Schlitzen", sondern mit einem in einem Hohlleiter angeordneten Leiter, der die Gegenelektrode darstellt und außerdem eine örtliche Feldüberhöhung des eingestrahlten Mikrowellenfeldes verursacht, die unabhängig von der an den Elektroden anliegenden Gleichspannung zur Ausbildung von mehreren Funkenkanälen zwischen dem Hohlleiter und dem Leiter führt.

Bei dieser Ausführungsform weist zweckmäßig der Leiter auf der dem Mikrowellengenerator abgewandten Seite einen Vorsprung auf, der einen geringeren Abstand zum Hohlleiter hat, als die übrigen Längenbereiche des Leiters. Dieser Vorsprung des Leiters bewirkt eine weitere Erhöhung der Mikrowellenfeldstärke in diesem Bereich und erzeugt auf diese Weise den ersten Funkendurchschlag, dem sofort weitere Überschläge zwischen dem Leiter und der Wand des Hohlleiters folgen. Diese sofort erfolgenden Funkenüberschläge finden ausschließlich in dem Längenbereich des Leiters statt, der sich von dem Vorsprung in Richtung auf den Mikrowellengenerator erstreckt.

Neben den oben im einzelnen diskutierten Ausführungsbeispielen ist unter Befolgung der Lehre des Hauptanspruches eine Vielzahl von weiteren Konfigurationen des Wellenleitersystemes denkbar, bei welchen die Initialfunken ohne Zuhilfenahme der an den Elektroden anliegenden Spannung allein durch Einkoppeln der Mikrowellenenergie erzeugt werden.

Die oben diskutierten Ausführungsbeispiele der Erfindung werden im folgenden anhand der Zeichnung näher erläutert. Es zeigen:

Fig. 1 In perspektivischer Darstellung ein erstes Ausführungsbeispiel einer Funkenstrecke gemäß der Erfindung:

Fig. 2 in perspektivischer Darstellung ein drittes Ausführungsbeispiel einer Funkenstrecke gemäß der Erfindung.

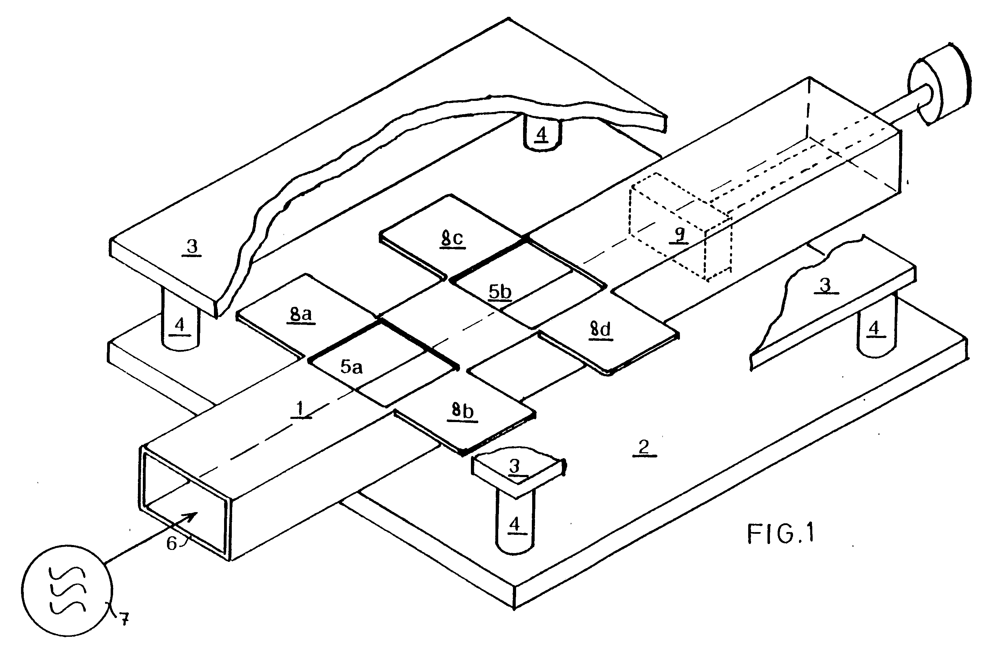

Der aus Fig. 1 ersichtliche Hohlleiter (Typ WR 112. 31.75x15.88x1.65mm) ist mit dem Bezugszeichen 1 bezeichnet und bildet zusammen mit einer Grundplatte 2 eine Elektrode einer Funkenstrecke. Die Gegenelektrode 3 der Funkenstrecke ist eine einfache Metallplatte. die mit vier Isolierstützen 4 an der Grundplatte 2 befestigt ist. Der Elektrodenabstand (Abstand der oberen Breitseite des Hohlleiters 1 und der Metallplatte 3) beträgt 2mm. Der Hohlleiter 1 weist zwei rechteckige Öffnungen 5a, 5b in der oberen Breitseite auf. die durch die Gegenelektrode 3 im Abstand von 2mm abgedeckt sind. so daß die Abstrahlung des in den Hohlleiter 1 über die Öffnung 6 mittels eines Mikrowellengenerators 7 eingespeisten Mikrowellenimpulses (9 GHz. 200 kW Impulsleistung, Impulsdauer 0,2 Mikrosekunden) weitgehend unterbunden wird. Dabei werden auch Hochfrequenzströme in der Gegenelektrode 3 erzeugt. Hierbei entstehen hohe Höchstfrequenzspannungen zwischen den Rändern der Löcher 5a. 5b und der Gegenelektrode 3. die zum Überschlag von Funken führen. Zur Erhöhung der elektrischen Höchstfrequenzfeld stärke zwischen den Rändern der Öffnungen 5a, 5b und der oberen Elektrode 3 sind seitlich Laschen 8a, 8b, 8c und 8d angebracht. die von den seitlichen Kanten der Öffnungen 5a. 5b eine halbe Wellenlänge nach außen ragen. Aus dem gleichen Grunde beträgt der Abstand zwischen den beiden Öffnungen 5a und 5b ebenfalls eine halbe Wellenlänge (16.5mm). Ein in den Hohlleiter einschiebbarer Reflektor 9 wird jeweils so eingestellt. daß sich möglichst viele Funkenkanäle gleichzeitig ausbilden.

Stoßstromkreise mit Ladespannungen bis zu 5kV sind mit dieser Funkenstrecke erfolgreich geschaltet worden. wobei bis zu 14 paralleler Funkenkanäle beobachtet worden sind.

Soll bei höheren Betriebsspannungen geschaltet werden. muß der Abstand zwischen dem Hohlleiter 1 und der Gegenelektrode 3 entsprechend vergrößert werden. Da der Abstand möglichst klein sein soll gegenüber den Abmessungen der Öffnungen 5a. 5b in der Wand des Hohlleiters 1, wird man einen Hohlleiter 1 mit größeren Querschnitt bei tieferer Mikrowellenfrequenz vorziehen.

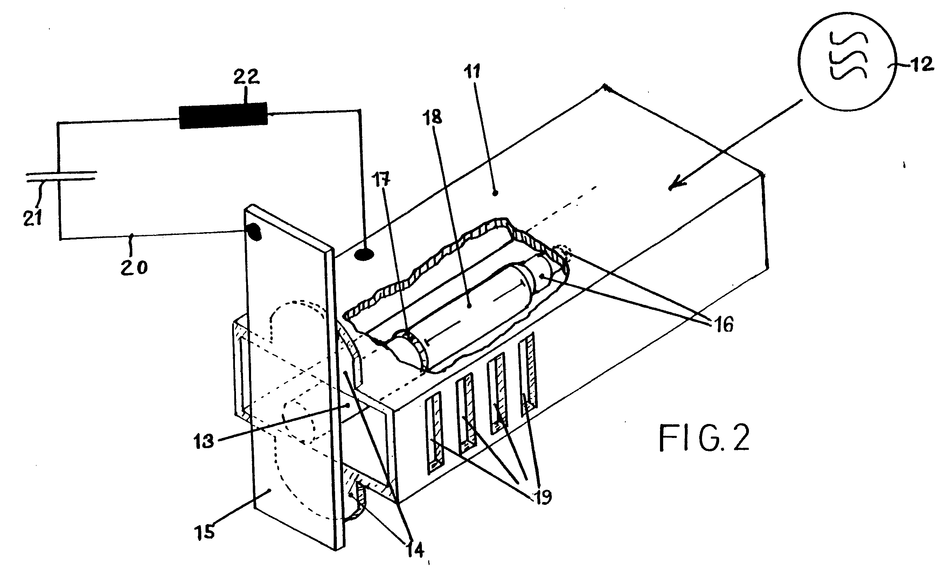

Das in Fig. 2 dargestellte Ausführungsbeispiel einer Funkenstrecke gemäß der Erfindung weist einen Rechteck-Hohlleiter 11 auf, dessen Innenmaße 28.5 x 12.6mm betragen. An diesen Rechteck-Hohlleiter 11 ist an einer Seite auf geeignete Art und Weise ein Mikrowellengenerator 12 angeschlossen. der Mikrowellenimpulse hoher Leistung erzeugt. Am dem Mikrowellengenerator 12 abgewandten Ende ist in dem Rechteck-Hohlleiter 11 ein Innenleiter 13 angeordnet, der in nicht näher dargestellter Weise gegen den Rechteck-Hohlleiter 11 isoliert befestigt ist. Der Rechteck-Hohlleiter 11 einerseits und der Innenleiter 13 andererseits bilden zugleich die beiden Elektroden der Funkenstrecke.

Der Rechteck-Hohlleiter 11 weist an seinem dem Mikrowellengenerator 12 abgewandten Ende an seiner Breitseite zwei senkrecht nach außen abstehende Laschen 14 auf. deren mittlere Länge etwa 8mm, d.h. 1.4 der Wellenlänge beträgt. Der Innenleiter 13 ist an seinem aus dem Hohlleiter 11 herausragenden Ende mit einer Metallplatte 15 verbunden. die in engem Abstand zu den Laschen 14 angeordnet ist und im Zusammenwirken mit diesen für einen hohen Reflexionsfaktor am Ende des Hohlleiters 11 sorgt. so daß der Austritt von Mikrowellenenergie an diesem Hohlleiterende ausreichend unterbunden ist.

Der in den Hohlleiter 11 hineinragende Innenleiter 13 ist an seinem in Richtung auf den Mikrowellengenerator 12 weisenden Ende stufenförmig verjüngt ausgebildet. um an dieser Stelle einen möglichst reflexionsfreien Übergang der Mikrowellenleistung zu erzielen. Die Stufen sind mit dem Bezugszeichen 16 bezeichnet. Außerdem ist der Innenleiter im Bereich seines dem Mikrowellengenerator 12 abgewandten Endabschnittes mit eine ringförmig verdickten Vorsprung 17 versehen. dessen Außendurchmesser 8mm beträgt. Dieser ringförmige Vorsprung 17 des Innenleiters 13 führt an dieser Stelle zu einer weiteren Erhöhung der Mikrowellenfeldstärke und bewirkt den ersten Funkendurchschlag. dem sofort weitere Überschläge zwischen dem Innenleiter 13 und der breiten Wand des Hohlleiters 11 folgen. Die sofort erfolgenden Überschläge finden auf dem zum Mikrowellengenerator 12 hinweisenden Abschnitt 18 des Innenleiters 13 statt.

Die schmalen Seitenwände des Hohlleiters 11 sind im Längenbereich des Innenleiters 13 mit quer zur Längsrichtung verlaufenden Lüftungsschlitzen 19 versehen. Diese Lüftungsschlitze 19 verlaufen parallel zu den Wandströmen und sind somit "erlaubte Schlitze". Die Lüftungsschlitze 19 dienen für den Durchtritt eines Luft- oder Gasstromes zur Reinigung der Funkenstrecke von Dämpfen und Abbrandstaub.

An den Rechteck-Hohlleiter 11 einerseits und die Metallplatte 15 des Innenleiters 13 andererseits ist der zu schaltende Hauptstromkreis 20 bestehend aus einer Kondensatorbatterie 21 und einer Induktivität 22 angeschlossen.

Mit einem Impulsmagnetron Typ SFD-354 (Impulsleistung ca. 200kW, Frequenz 9 GHz, Impulsdauer 2μs) als Mikrowellengenerator konnten mit dieser Funkenstrecke gleichzeitig zehn bis zwanzig Funkenkanäle bei Ladespannungen der Kondensatorbatterie 21 (C = 250μF) von 100V bis 7kV erzeugt werden. Der maximale Impulsstrom betrug etwa 100kA. Die Induktivität 22 der zusätzlich in den Entladekreis als Last eingefügten Spule beträgt 1μH.

## Ansprüche

1. Triggerbare Funkenstrecke, deren mit Abstand zueinander angeordneten Elektroden integraler Bestandteil eines Mikrowellen-Wellenleitersystemes sind, welches an einen Mikrowellengenerator angeschlossen ist, der Mikrowellenimpulse hoher Leistung erzeugt, welche beim Einkoppeln in das Wellenleitersystem den Funkenüberschlag zwischen den Elektroden initiieren, **dadurch gekennzeichnet,** daß das Wellenleitersystem eine Konfiguration aufweist, die beim Einkoppeln des Mikrowellenimpulses allein durch Mikrowellenenergie unabhängig von der an den Elektroden anliegenden Gleichspannung mehrere Funkenkanäle erzeugt.

2. Funkenstrecke nach Anspruch 1, dadurch gekennzeichnet, daß das Wellenleitersystem in Wandbereichen, in denen der Mikrowellenimpuls hohe Wandströme erzeugt, mit einer oder mehreren Wandunterbrechungen versehen ist, in denen beim Einkoppeln des Mikrowellenimpulses Funkenkanäle entstehen, wobei die Wandungen des Wellenleitersystemes zum Teil von der einen (1, 2) und zum Teil von der anderen Elektrode (3) gebildet werden.

3. Funkenstrecke nach den Ansprüchen 1 und 2, dadurch gekennzeichnet, daß das Wellenleitersystem einen die erste Elektrode bildenden Rechteck-Hohlleiter (1) aufweist, der an einer Breitseite mit Öffnungen (5a, 5b) versehen ist, die von einer mit engem parallelem Abstand zur Außenseite des Rechteck-Hohlleiters (1) angeordneten, plattenförmigen zweiten Elektrode (3) abgedeckt sind, wobei an dem Rechteck-Hohlleiter (1) seitlich neben den Öffnungen (5a, 5b) Laschen (8a, 8b, 8c, 8d) vorgesehen sind, die ebenfalls mit engem parallelen Abstand von der zweiten Elektrode (3) angeordnet sind und von den seitlichen Kanten der Öffnungen (5a, 5b) jeweils um eine halbe Wellenlänge oder um ein ganzzahliges Vielfaches einer halben Wellenlänge nach außen ragen.

4. Funkenstrecke nach Anspruch 1, dadurch gekennzeichnet, daß das Wellenleitersystem (11, 23) einen Hohlleiter (11) aufweist, in dessen Innenraum isoliert von dem Hohlleiter (11) ein Leiter (13) angeordnet ist, wobei der Hohlleiter (11) und der Leiter (13) die beiden Elektroden der Funkenstrecke bilden.

5. Funkenstrecke nach Anspruch 4, dadurch gekennzeichnet, daß der Leiter (13) auf der dem Mikrowellengenerator (12) abgewandten Seite einen Vorsprung (17) aufweist, der einen geringeren Abstand von dem Hohlleiter (11) hat, als die übrigen Längenbereiche des Leiters (13).

FIG.1

FIG.2

EP 0 297 343 A1

| | EINSCHLÄGIGE DOKUMENTE | | EP 88109413.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US - A - 4 477 746 (PILTCH) <br><br> * Spalte 3, Zeile 18 - Spalte 5, Zeile 24; Fig. 2 * <br><br> -- | 1 | H 01 T 2/00 <br> H 01 S 3/097 <br> B 23 K 28/00 |
| A | DE - A1 - 3 043 693 (TOKYO SHIBAURA DENKI KK) <br><br> * Seite 7, Zeile 27 - Seite 14, Zeile 3; Fig. 1 * <br><br> ---- | 1 | |

**RECHERCHIERTE SACHGEBIETE (Int. Cl.4)**

H 01 T 1/00

H 01 T 2/00

H 01 T 14/00

H 01 T 15/00

H 01 S 3/00

B 23 K 28/00

H 05 B 6/00

H 03 B 9/00

H 01 J 7/00

Der vorliegende Recherchenbericht wurde für alle Patentansprüche erstellt.

| Recherchenort | Abschlußdatum der Recherche | Prüfer |
|---|---|---|
| WIEN | 21-10-1988 | GERSTBACH |